Europäisches Patentamt

European Patent Office

Office européen des brevets

(11) Publication number: **0 067 257**
**B1**

(12) **EUROPEAN PATENT SPECIFICATION**

(45) Date of publication of patent specification: **05.02.86**

(51) Int. Cl.⁴: **C 03 C 17/06, C 03 C 17/10**

(21) Application number: **81302669.7**

(22) Date of filing: **15.06.81**

(54) Heat radiation reflecting glass and preparation thereof.

(43) Date of publication of application:
**22.12.82 Bulletin 82/51**

(45) Publication of the grant of the patent:
**05.02.86 Bulletin 86/06**

(84) Designated Contracting States:
**BE DE FR GB IT**

(56) References cited:
**EP-A-0 066 656**
**DD-A- 109 669**
**FR-A-1 562 392**
**US-A-3 723 155**
**US-A-3 962 494**
**US-A-4 132 832**
**US-A-4 158 716**

(73) Proprietor: **ASAHI GLASS COMPANY LTD.**
**No. 1-2, Marunouchi 2-chome**
**Chiyoda-ku, Tokyo (JP)**

(72) Inventor: **Kobayashi, Takayuki**
**21-2 Higashiterao Higashidai**
**Tsurumi-ku Yokohama-shi Kanagawa-ken (JP)**
Inventor: **Tamamura, Ryo**
**274-8 Arai-cho Hodogaya-ku**
**Yokohama-shi Kanagawa-ken (JP)**

(74) Representative: **Warden, John Christopher et al**
**R.G.C. Jenkins & Co. 12-15, Fetter Lane**
**London EC4A 1PL (GB)**

Courier Press, Leamington Spa, England.

# Description

The present invention relates to a heat radiating reflecting glass having high heat radiation reflectivity and excellent durability.

Glass plates having a thin transparent or translucent metal layer made of silver, nickel or aluminium which reflect or intercept heat radiation of solar or radiant heat are known for use as heat radiation reflecting glass plates and have been used in the form of single glass plates, insulating glass units or laminated glass plates in buildings, vehicles and various types of apparatus and instruments. The heat radiation reflecting glasses having a metal layer formed by a chemical plating have the advantage of a low cost, because economical apparatus can be used for their preparation in comparison with that required for a vacuum deposition or sputtering process. Among the glasses made by such a chemical coating process, a product having a copper layer has the best heat radiation reflectivity, however, it has insufficient corrosion resistance to give it the required durability. On the other hand, a product having a nickel layer has the desired corrosion resistance and durability but has inferior heat radiation reflectivity to that of the copper layer.

FR—A—1 562 392 discloses a process for coating a glass surface with a thin reflective layer of a metal to reduce the transmittance of radiation, especially heat radiation, wherein the cleaned glass surface is treated in a bath containing salts of two different metals, one of which is copper or nickel and the other of which may be nickel or cobalt. The bath preferably contains a reducing agent to deposit the metals. This process can be used for producing a coating of copper or nickel, or for forming a copper layer with a superposed layer of nickel to protect the copper against the atmosphere.

US—A—3 962 494 discloses the coating of a substrate such as glass with a metallic layer comprising for example copper and cobalt, by dip coating the substrate in a solution comprising cupric sulphate, cobaltous acetate, Rochell Salt and formaldehyde, and then reducing the metal salts on the substrate to the respective metals with a sodium borohydride (or dimethylamine borane) solution containing sodium hydroxide.

US—A—4 132 832 discloses an electroless plating process using colloidal dispersions of for example copper and nickel salts, which are reduced with sodium borohydride.

EP—A—0 066 656, in the name of the present Applicants, discloses the preparation of a nickel layer by reduction of a nickel salt in the presence of diethylene triamine and/or imidazole. A composite layer of nickel and another metal can be formed by incorporating a salt of the other metal such as copper, cobalt, iron, silver, gold or platinum together with the nickel salt.

The present invention provides in one aspect a heat radiation reflecting glass which comprises a transparent nickel-copper-boron alloy layer formed by a chemical plating process on a glass plate, characterised in that the transparent alloy layer comprises 1 to 20 wt. % of nickel and at least 75 wt. % of copper, and also includes 0.001 to 5 wt. % of boron.

In another aspect the invention provides a process for preparing a heat radiation reflecting glass characterized in that a transparent nickel-copper-boron alloy layer comprising at least 75 wt. % of copper, 1 to 20 wt. % of nickel and 0.001 to 5 wt. % of boron is formed on a glass plate by a chemical plating process wherein an aqueous copper salt solution containing 0.02 to 2% of a copper salt and a chelating agent, an aqueous nickel salt solution containing 0.01 to 1% of a nickel salt and a chelating agent, an aqueous solution of a reducing agent containing an alkali metal borohydride or a borane amine to reduce the copper and nickel salts, and an effective amount of an aqueous palladium salt solution are applied to the surface of the glass plate at a temperature of from 10°C to 60°C.

It is possible in this way to obtain excellent heat radiation reflectivity, with a K value (heat-transfer coefficient), of up to 2.0 and SC (shading coefficient) of up to 0.20, as well as excellent corrosion resistance at low cost.

When the Ni content is more than 20 wt. % the heat radiation reflectivity is disadvantageously low whereas when it is less than 1 wt. %, the corrosion resistance is not satisfactory. When the Cu content is more than 99 wt. %, the corrosion resistance is not satisfactory whereas when it is less than 75 wt. %, the heat radiation reflectivity is disadvantageously low.

A Pd component is preferably incorporated in the transparent nickel-copper alloy layer, in an amount up to 100 ppm (part per million), more preferably 2 to 80 ppm by weight based on the alloy layer. When the Pd content is more than 100 ppm, the ratio of the Ni component is disadvantageously high whereas it is less than 1 ppm, the ratio of the Ni component is disadvantageously low.

A boron component is also incorporated in the transparent alloy layer, in an amount from 0.001 to 5 wt. %. The transparent nickel-copper-boron alloy layer preferably comprises especially 1 to 10 wt. % of Ni component, 89 to 99 wt. % of Cu component and 0.001 to 1 wt. % of B component.

When the B content is more than 5 wt. %, the heat radiation reflectivity is disadvantageously low. The advantages of both of the Ni component and the Cu component have been obtained by the combination of the Ni component, the Cu component and the B component to give a heat radiation reflecting glass having excellent heat radiation reflectivity such as a heat-transfer coefficient (K value) of up to 2.0 and a shading coefficient (SC) of up to 0.20, as well as excellent corrosion resistance.

The transparent nickel-copper-boron alloy layer of the present invention preferably has a thickness of 1 to 100 nm, more preferably 5 to 100 nm and especially 10 to 70 nm so as to impart the desired transparency and desired optical characteristics such as heat radiation reflectivity and transmissivity.

The hue of the nickel-copper-boron alloy layer of the present invention can be controlled in a range from neutral to copper color by selecting the Ni content. For example, a more neutral color is given by increasing the Ni content whereas the copper color is given by decreasing the Ni content.

The 'nickel-copper-boron alloy layer' of the present invention as referred to herein means a layer comprising a nickel-copper-boron alloy as the main component but which may include a small amount of another component such as Pd.

In the preparation of the transparent nickel-copper-boron alloy layer on the glass plate, a nickel salt, a copper salt and an alkali metal borohydride or a borane amine are applied, in the presence of a Pd salt, to the surface of the glass plate.

In a preferred process, the nickel-copper-boron alloy layer is formed by the following steps:

(1) The surface of the glass plate is cleaned by rinsing with water or a detergent or polishing with an abrasive such as cerium oxide.

(2) The surface of the glass plate is rinsed with water, preferably distilled water or deionized water, after contacting it with a dilute aqueous solution of a tin salt such as stannous chloride for a short time at about room temperature.

(3) If necessary, the surface is further treated with a dilute aqueous solution of a palladium salt such as palladium chloride and then is rinsed with water.

(4). The nickel salt, the copper salt and an alkali borohydride or a borane amine as a reducing agent for the nickel salt and the copper salt are applied in the presence of the palladium salt to deposit the nickel-copper-boron alloy layer.

(5) The glass plate having a nickel-copper-boron alloy layer is rinsed with water.

The following processes can be used for applying the nickel salt, the copper salt and the boron-containing reducing agent to the glass plate, in the presence of a palladium salt:

spraying simultaneously a solution of the nickel salt, a solution of the copper salt and a solution of the palladium salt or a solution of the nickel salt and the copper salt and a solution of the boron-containing reducing agent;

spraying a mixture of three or four of these solutions;

coating a mixture of the four solutions on the glass plate, for example by roll coating;

spraying the solution of the nickel salt, the solution of the copper salt, the solution of the palladium salt or a mixture thereof by mixing them in a spray gun in a form of a single solution; or other similar processes.

Various formulations may be used for the solution of the nickel salt and the solution of the copper salt used for the formation of the nickel-copper alloy layer.

As the aqueous solution of the nickel salt, it is possible to use a solution of an inorganic or organic nickel salt such as nickel chloride, nickel sulfate, nickel acetate or a mixture of two or more nickel salts and a chelating agent such as Rochelle salt, EDTA, EDTA-2Na, sodium citrate and sodium gluconate; a pH buffering agent and a pH modifier or a solution containing a desired additive.

As the aqueous solution of the copper salt, it is possible to use a solution of a copper salt such as copper nitrate, copper sulfate, copper acetate or a mixture of two or more copper salts and a chelating agent, a pH buffering agent and a pH modifier and, if necessary, a desired additive as used in the nickel solution.

As the aqueous solution of the palladium salt, it is possible to use a solution of a salt such as palladium chloride, palladium nitrate or palladium sulfate.

The concentration of the nickel salt in the nickel salt solution is preferably in a range of 0.01 to 1% and the concentration of the copper salt in the copper salt solution is preferably in a range of 0.02 to 2%.

The spraying process is preferred as the process for applying these solutions on the glass plate. It is especially preferable to apply these solutions at the same time.

In the process of the present invention, the palladium salt is present in the deposition of the metals for reducing the copper salt and the nickel salt whereby the nickel-copper-boron alloy layer can be effectively formed by the effect of the palladium salt. When the palladium salt is not present, it is less easy to deposit the nickel component and to form a nickel-copper alloy layer containing 1 to 20 wt. % of nickel component.

It is preferable to include the palladium salt at a concentration of 1 to 100 ppm in the solution for plating the nickel-copper-boron alloy. When it is more than 100 ppm, the ratio of Ni component in the alloy layer is too high and the heat reflectivity is disadvantageously low whereas when it is less than 1 ppm, the ratio of Ni component in the alloy layer is too small, and the durability of the alloy layer is inferior.

The boron compound is used to reduce the nickel salt and the copper salt and sometimes the palladium salt, and to incorporate the boron component in the alloy layer. The alkali metal borohydride can be sodium borohydride, potassium borohydride or lithium borohydride. The borane amine can for example be borane amine itself, borane dimethylamine, borane diethylamine or borane trimethylamine. When the alkali metal borohydride is used, no toxic gas is generated and the nickel-copper-boron alloy layer is obtained without causing pollution. Toxic gases are generated in the conventional chemical plating processes using formalin or the like.

The time for chemical plating in the deposition of the nickel-copper-boron alloy layer is preferably in a range of 30 seconds to 20 minutes, especially 1 to 10 minutes. The temperature of the solutions of the nickel salt, the copper salt and the palladium salt, the solution of the boron-containing reducing agent or the solution of these salts and the reducing agent is in a range from 10 to 60°C, especially about 30°C. The rates of deposition of the nickel salt and the copper salt vary in response to variations of the temperature in the chemical plating. It is important to maintain the temperature in the chemical plating to within 3°C above or below the desired value, to prevent non-uniformity of color. The temperature of the substrate in the chemical plating is in a range of 10 to 60°C, especially about room temperature. The spraying rate and plating time can be selected so as to give the desired thickness of the alloy layer.

According to the present invention, it is possible to form a protective coating or other functional layer as a top coating on the nickel-copper-boron alloy layer formed on the glass plate, or to carry out a chemical treatment of the layer, or to form an adhesive coating or other functional layer as an under coating.

The glass plate can be made of normal glass or heat radiation-absorbing glass or various other glasses, including organic glasses such as polycarbonate and methacrylate.

The present invention will be further illustrated by the following Examples and References which are provided for purposes of illustration only and are not intended to be construed as limiting the present invention.

Reference 1

A glass plate (300 mm×300 mm×5 mm) was polished with ceria and rinsed with water. An aqueous solution of stannous chloride ($SnCl_2$: 0.8 g/1 liter of water) was sprayed on the surface of the glass plate at a rate of 5 liter/m² as a sensitizing treatment, the glass plate was rinsed with water and an aqueous solution of palladium chloride ($PdCl_2$: 0.05 g/1 liter of water) was sprayed on the surface of the glass plate at a rate of 5 liter/m² as an activating treatment.

The following solutions $A_1$ and the solution $B_1$ were respectively sprayed on the treated surface of the glass plate by spray-guns at a volumetric ratio of 1:1, each at a rate of 5 liter/m² and for 6 minutes to deposit a nickel-copper alloy layer on the glass plate by a chemical plating process.

Solution $A_1$:

| Cupric sulfate | 1 g/liter |
| Nickel sulfate | 2 g/liter |
| Formalin (38%) | 43 ml/liter |
| Palladium chloride | 0.008 g/liter |
| Water | Balanced |

Solution $B_1$:

| Rochelle salt | 20 g/liter |
| Sodium hydroxide | 10 g/liter |
| Water | Balanced |

The resulting nickel-copper alloy layer had a thickness of 500 Å (50 nm) and a ratio of Ni to Cu of 1:99 by weight. In the nickel-copper alloy layer, any Pd component was not found.

The characteristics of the layer were measured. The results are shown in Table 1.

Reference 2:

A glass plate (300 mm×300 mm×5 mm) was polished with ceria and rinsed with water. An aqueous solution of stannous chloride ($SnCl_2$: 0.8 g/1 liter of water) was sprayed on the surface of the glass plate at a rate of 5 liter/m² to perform a sensitizing treatment and then, the glass plate was rinsed with water and an aqueous solution of palladium chloride ($PdCl_2$: 0.05 g/1 liter of water) was sprayed on the surface of the glass plate at a rate of 5 liter/m² to perform an activating treatment.

The following solution $A_2$ and the solution of $B_2$ were respectively sprayed on the treated surface of the glass plate by each spray gun at a volumetric ratio of 1:1 at each rate of 5 liter/m² and they were kept for 6 minutes to deposit a nickel-copper alloy layer on the glass plate by a chemical plating.

Solution $A_2$:

| Cupric sulfate | 1 g/liter |
| Nickel sulfate | 2 g/liter |
| Formalin (38%) | 43 ml/liter |
| Palladium chloride | 0.017 g/liter |
| Water | Balanced |

Solution $B_2$:

| Rochelle salt | 20 g/liter |
| Sodium hydroxide | 10 g/liter |
| Water | Balanced |

The resulting nickel-copper-palladium alloy layer had a thickness of 500 Å (50 nm) and a ratio of Ni to Cu of 7:93 by weight and a content of Pd component of 10 ppm (part per million).

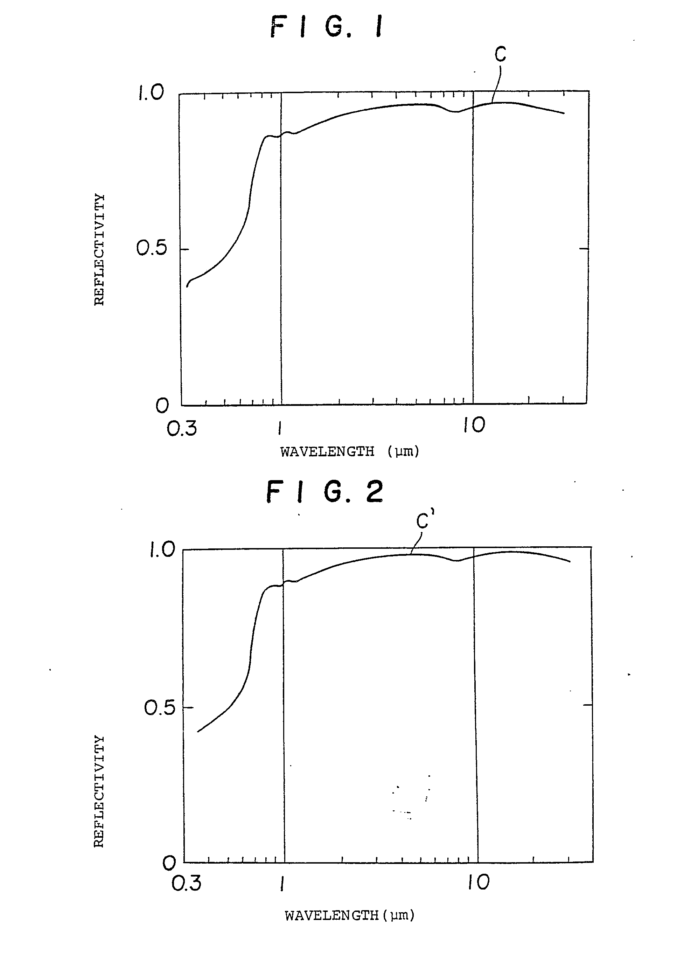

The characteristics of the layer were measured. The results are shown in table 1. The optical characteristic is shown in Figure 1c.

## Example 1:

A glass plate (300 mm×300 mm×5 mm) was polished with ceria and rinsed with water. An aqueous solution of stannous chloride ($SnCl_2$: 0.8 g/1 liter of water) was sprayed on the surface of the glass plate at a rate of 5 liter/m² to perform a sensitizing treatment and then, the glass plate was rinsed with water and an aqueous solution of palladium chloride ($PdCl_2$: 0.05 g/1 liter of water) was sprayed on the surface of the glass plate at a rate of 5 liter/m² to perform an activating treatment.

The following solution $A_3$ and the solution $B_3$ were respectively sprayed on the treated surface of the glass plate by each spray-gun at a volumetric ratio of 1:1 at each rate of 5 liter/m² and they were kept for 6 minutes to deposit a nickel-copper-boron alloy layer on the glass plate by a chemical plating process.

Solution $A_3$:

| | |
|---|---|
| Nickel sulfate | 8.3 g/liter |
| Copper sulfate | 1.7 g/liter |
| Rochelle salt | 20 g/liter |
| Sodium hydroxide | 10 g/liter |
| Palladium chloride | 0.02 g/liter |
| Ammonia water (29% of sol.) | 0.5 ml/liter |
| Water | Balanced |

Solution $B_3$:

| | |
|---|---|
| Sodium hydroxide | 0.25 g/liter |
| Sodium borohydride | 0.125 g/liter |
| Water | Balanced |

The resulting nickel-copper-boron alloy layer had a thickness of 500 Å (50 nm) and comprised 3.4 wt. % of Ni, 96.5 wt. % of Cu and 0.1 wt. % of B.

The characteristics of the layer were measured. The results are shown in Table 1. The optical characteristic is shown in Figure 1c′.

## Example 2:

In accordance with the process of Example 1 except using Solution $A_4$ and Solution $B_4$ a nickel-copper-boron alloy layer was formed.

Solution $A_4$:

| | |
|---|---|
| Nickel sulfate | 8.3 g/liter |
| Cupric sulfate | 1.7 g/liter |
| Rochelle salt | 20 g/liter |
| Sodium hydroxide | 10 g/liter |
| Palladium chloride | 0.01 g/liter |
| Water | Balanced |

Solution $B_4$:

| | |
|---|---|
| Sodium hydroxide | 0.25 g/liter |
| Sodium borohydride | 0.125 g/liter |
| Water | Balanced |

The resulting nickel-copper-boron alloy layer had a thickness of 500 Å (50 nm) and comprised 2.0 wt. % of Ni and 97.9 wt. % of Cu and 0.1 wt.% of B. The durability test result of the layer is shown in Table 1.

## Example 3:

In accordance with the process of Example 1 except using Solution $A_5$ and Solution $B_5$, a nickel-copper-boron alloy layer was formed.

Solution $A_5$:

| | |
|---|---|
| Nickel sulfate | 8.3 g/liter |
| Copper sulfate | 1.7 g/liter |
| Rochelle salt | 20 g/liter |
| Sodium hydroxide | 10 g/liter |
| Palladium chloride | 0.02 g/liter |
| Ammonia water | 0.5 ml/liter |
| Water | Balanced |

Solution $B_5$:

| | |
|---|---|
| Sodium hydroxide | 0.25 g/liter |
| Borane amine | 5 g/liter |
| Water | Balanced |

The resulting nickel-copper-boron alloy layer had a thickness of 500 Å and comprised 3.2 wt. % of Ni, 96.6 wt. % of Cu and 0.2 wt % of B. The durability test result of the layer is shown in Table 1.

## Reference 3:

A glass plate (300 mm×300 mm×5 mm) was polished with ceria and rinsed with water. An aqueous solution of stannous chloride ($SnCl_2$: 0.8 g/1 liter of water) was sprayed on the surface of the glass plate at a rate of 5 liter/m² to perform a sensitizing treatment and then, the glass plate was rinsed with water and an aqueous solution of palladium chloride ($PdCl_2$: 0.05 g/1 liter of water) was sprayed on the surface of the glass plate at a rate of 5 liter/m² to perform an activating treatment.

The following solution $A_6$ and the solution $B_6$ were respectively sprayed on the treated surface of the glass plate by each spray-gun at a volumetric ratio of 1:1 at each rate of 5 liter/m² and they were kept for 6 minutes to deposit a metal layer on the glass plate by a chemical plating process.

Solution $A_6$:

| | |
|---|---|
| Cupric sulfate | 1 g/liter |
| Nickel sulfate | 2 g/liter |
| Formalin (38%) | 43 ml/liter |
| Water | Balanced |

Solution $B_6$:

| | |
|---|---|
| Rochelle salt | 20 g/liter |
| Sodium hydroxide | 10 g/liter |
| Water | Balanced |

The resulting metal layer had a thickness of 500 Å (50 nm) and comprised about 100% of Cu (Ni was not substantially included). The characteristics of the layer were measured. The results are shown in Table 1.

Reference 4:

On the glass plate treated by the process of Reference 3, Solution $A_7$ and Solution $B_7$ were respectively sprayed by each spray-gun at a volumeric ratio of about 1:1 at each rate of 5 liter/m² and they were kept for 2 minutes to deposit a nickel-boron alloy layer on the glass plate by a chemical plating.

Solution $A_7$:

| | |
|---|---|
| Nickel acetate | 5.0 g/liter |
| Sodium gluconate | 9.0 g/liter |
| Ammonia water (39%) | 2.0 ml/liter |
| Boric acid | 2.5 g/liter |
| Water | Balanced |

Solution $B_7$:

| | |
|---|---|
| Sodium borohydride | 0.5 g/liter |
| Sodium hydroxide | 0.2 g/liter |
| Water | Balanced |

The resulting nickel-boron alloy layer had a thickness of 500 Å (50 nm).

The characteristics of the nickel-boron layer were measured. The results are shown in Table 1.

Reference 5:

On the glass plate treated by the process of Reference 3, Solution $A_8$ and Solution $B_8$ were respectively sprayed by each spray-gun at a volumetric ratio of about 1:1 at each rate of 5 liter/m² and they were kept for 2 minutes to deposit a copper-boron alloy layer on the glass plate by a chemical plating.

Solution $A_8$:

| | |
|---|---|
| Cupric sulfate | 5.0 g/liter |
| Sodium gluconate | 9.0 g/liter |
| Ammonia water (39%) | 2.0 ml/liter |
| Boric acid | 2.5 g/liter |
| Water | Balanced |

Solution $B_8$:

| | |
|---|---|
| Sodium borohydride | 0.5 g/liter |
| Sodium hydroxide | 0.3 g/liter |
| Water | Balanced |

The resulting copper-boron alloy layer had a thickness of 500 Å (50 nm).

The characteristics of the copper-boron layer were measured. The results are shown in Table 1.

# 0 067 257

TABLE 1

|  | Layer | Visible transmis-sivity (%) | Visible reflec-tivity (%) | K value (K cal/m². hr. °C) | SC | Reflective color | Durability (corrosion resistance) |
|---|---|---|---|---|---|---|---|
| Ref. 1 | Ni-Cu alloy | 15 | 31 | 1.70 | 0.19 | neutral | O |
| Ref. 2 | Ni-Cu-Pd alloy | 16.3 | 30 | 1.76 | 0.20 | neutral | O |
| Exp. 1 | Ni-Cu-B alloy | 15 | 32 | 1.70 | 0.18 | neutral | O |
| Exp. 2 | Ni-Cu-B alloy | 15 | 33 | 1.60 | 0.17 | pale copper color | O |
| Exp. 3 | Ni-Cu-B alloy | 16 | 30 | 1.72 | 0.19 | neutral | O |
| Ref. 3 | Cu | 16.0 | 32 | 1.60 | 0.15 | copper color | X |
| Ref. 4 | Ni-B alloy | 15.5 | 28 | 2.50 | 0.25 | neutral | O |
| Ref. 5 | Cu-B alloy | 15 | 33 | 1.62 | 0.17 | copper color | X |

As is clearly found in Table 1, the heat radiation reflecting glass of the present invention had superior thermal characteristics such as heat passing coefficient and shading coefficient to those of the conventional heat-transfer reflecting glass having a nickel-boron alloy layer and also had superior durability to those of the copper layer and had neutral hue to be desirable as a heat radiation reflecting glass.

The durability was determined by an observation of degree of corrosion after maintaining at 30°C RH of 70% for one month.

O: non-corrosion.

X: corrosion.

The visible transmissivity (Tv) was measured under the light incidence from each layer of the sample of glass plate having a thickness of 5 mm.

The visible reflectivity (Rv) was measured under the light incidence from the non-coated side of a glass plate coated with the layer having a thickness of 5 mm.

The heat-transfer coefficient (K value) and shading coefficient (SC) were measured for an insulating glass unit prepared by a pair of glass plates having a thickness of 5 mm and an air space of 12 mm.

Figure 1 shows optical characteristics of the heat radiation reflecting glass obtained in Reference 2; and

Figure 2 shows optical characteristics of the heat radiation reflecting glass of the present invention obtained in Example 1.

## Claims

1. A heat radiation reflecting glass which comprises a transparent nickel-copper-boron alloy layer formed by a chemical plating process on a glass plate, characterised in that the transparent alloy layer comprises 1 to 20 wt. % of nickel and at least 75 wt. % of copper, and also includes 0.001 to 5 wt. % of boron.

2. A heat radiation reflecting glass according to Claim 1 characterised in that said transparent nickel-copper-boron alloy layer further comprises up to 100 ppm (parts per million) of a palladium component.

3. A heat radiation reflecting glass according to Claim 1 or Claim 2 characterised in that said transparent nickel-copper-boron alloy layer has a thickness of 1 to 100 nm.

4. A process for preparing a heat radiation reflecting glass characterized in that a transparent nickel-copper-boron alloy layer comprising at least 75 wt. % of copper, 1 to 20 wt. % of nickel and 0.001 to 5 wt. % of boron is formed on a glass plate by a chemical plating process wherein an aqueous copper salt solution containing 0.02 to 2% of a copper salt and a chelating agent, an aqueous nickel salt solution containing 0.01 to 1% of a nickel salt and a chelating agent, an aqueous solution of a reducing agent containing an alkali metal borohydride or a borane amine to reduce the copper and nickel salts, and an effective amount of an aqueous palladium salt solution are

7

applied to the surface of the glass plate at a temperature of from 10°C to 60°C.

5. A process according to Claim 4 characterised in that said alkali metal borohydride is sodium borohydride.

**Revendications**

1. Verre réflecteur de rayonnement thermique qui comprend une couche transparente d'un alliage de nickel-cuivre-bore formé par un procédé de dépôt chimique sur un plaque de verre, caractérisé en ce que la couche d'alliage transparente comprend 1 à 20% en poids de nickel et au moins 75% en poids de cuivre, et renferme également 0,001 à 5% en poids de bore.

2. Verre réflecteur de rayonnement thermique selon la revendication 1, caractérisé en ce que ladite couche transparente d'alliage nickel-cuivre-bore comprend en outre jusqu'à 100 ppm (parties par million) d'un composant palladium.

3. Verre réflecteur de rayonnement thermique selon la revendication 1 ou 2, caractérisé en ce que ladite couche transparente d'alliage nickel-cuivre-bore a une épaisseur de 1 à 100 nm.

4. Procédé pour la préparation d'un verre réflecteur de rayonnement thermique, caractérisé en ce que l'on forme une couche transparente d'un alliage de nickel-cuivre-bore comprenant au moins 75% en poids de cuivre, 1 à 20% en poids de nickel et 0,001 à 5% en poids de bore sur une plaque de verre par un procédé de dépôt chimique dans lequel on applique une solution aqueuse d'un sel de cuivre contenant 0,02 à 2% d'un sel de cuivre et un agent chélatant, une solution aqueuse d'un sel de nickel contenant 0,01 à 1% d'un sel de nickel et un agent chélatant, une solution aqueuse d'un agent réducteur contenant un borohydrure de métal alcalin ou un borane amine pour réduire les sels de cuivre et de nickel, et une quantité efficace d'une solution aqueuse d'un sel de palladium sur la surface de la plaque de verre à une température de 10°C à 60°C.

5. Procédé selon la revendication 4, caractérisé en ce que ledit borohydrure de métal alcalin est le borohydrure de sodium.

**Patentansprüche**

1. Wärmestrahlung reflektierende Glas mit einer transparenten Nickel-Kupfer-Bor-Legierungsschicht, welche auf einer Glasscheibe durch eine chemisches Beschichtungsverfahren ausgebildet wurde, dadurch gekennzeichnet, daß die transparente Legierungsschicht 1 bis 20 Gew. % Nickel und mindestens 75 Gew. % Kupfer umfaßt sowie 0,001 bis 5 Gew. % Bor.

2. Wärmestrahlung reflektierendes Glas nach Anspruch 1, dadurch gekennzeichnet, daß die transparente Nickel-Kupfer-Bor-Legierungsschicht ferner bis zu 100 ppm einer Palladiumkomponente umfaßt.

3. Wärmestrahlung reflektierendes Glas nach einem der Ansprüche 1 oder 2, dadruch gekennzeichnet, daß die transparente Nickel-Kupfer-Bor-Legierungsschicht eine Dicke von 1 bis 100 nm hat.

4. Verfahren zur Herstellung eines Wärmestrahlung reflektierenden Glases, dadurch gekennzeichnet, daß eine transparente Nickel-Kupfer-Bor-Legierungsschicht, umfassend mindestens 75 Gew. % Kupfer, 1 bis 20 Gew. % Nickel und 0,001 bis 5 Gew. % Bor, auf einer Glasscheibe durch ein chemisches Abscheidungsverfahren ausgebildet wird, wobei eine wässrige Kupfersalzlösung, enthaltend 0,02 bis 2% eines Kupfersalzes und ein Chelatisierungsmittel, eine wässrige Nickelsalzlösung, enthaltend 0,01 bis 1% eines Nickelsalzes und ein Chelatisierungsmittel, eine wässrige Lösung eines Reduktionsmittels, enthaltend ein Alkalimetallborhydrid oder ein Boranamin, zur Reduzierung der Kupfer- und Nickelsalze und eine wirksame Menge einer wässrige Palladiumsalzlösung auf die Oberfläche der Glasscheibe bei einer Temperatur von 10°C bis 60°C aufgebracht wird.

5. Verfahren nach Anspruch 4, dadurch gekennzeichnet, daß das Alkalimetallborhydrid Natriumborhydrid ist.

# F I G. 1

REFLECTIVITY

1.0

0.5

0

0.3    1                    10

WAVELENGTH (μm)

# F I G. 2

REFLECTIVITY

1.0

0.5

0

0.3    1                    10

WAVELENGTH (μm)

1